# EUROPÄISCHE PATENTANMELDUNG

(11) **EP 1 995 852 A2**
(43) Veröffentlichungstag der Anmeldung: **26.11.2008**
(21) Anmeldenummer: 08104080.0
(22) Anmeldetag: 23.05.2008
(51) Int. Cl.: H02K 5/08

(54) **Aufzugantrieb und Verfahren zu seiner Herstellung**

(30) Priorität: 22.05.2007 WO PCT/EP2007/004521
(71) Anmelder: ThyssenKrupp Aufzugswerke GmbH, 73765 Neuhausen a.d.F. (DE)
(72) Erfinder: Vogler, Eberhard, 73765 Neuhausen (DE); Nägele, Roland, 73765 Neuhausen (DE); Resag, Uwe, 72631 Aichtal (DE); Schulze, Jochen, 72770 Reutlingen (DE)
(74) Vertreter: Hössle Kudlek & Partner

(57) **Zusammenfassung**

Die vorliegende Erfindung betrifft einen Aufzugantrieb mit einem Rotor (24) und einem ein Blechpaket (22a) mit Wicklungen (22b) aufweisenden Stator (22), wobei das Blechpaket (22a) mit den Wicklungen (22b) und wenigstens ein tragendes Bauteil (21, 28) des Aufzugantriebs wenigstens teilweise mit einer Vergussmasse (23) zu einer statorseitigen Einheit (50) vergossen sind.

## Beschreibung

Die vorliegende Erfindung betrifft einen Aufzugantrieb, insbesondere die Statorseite eines Aufzugantriebs. Die Erfindung betrifft ferner ein Verfahren zur Herstellung eines Stators bzw. einer statorseitigen Einheit eines derartigen Aufzugantriebs.

In Aufzugantrieben werden üblicherweise Elektromotoren eingesetzt, die den elektromotorischen Teil des Aufzugantriebs bilden. Dieser elektromotorische Teil, der bspw. als Synchronmotor mit einem Rotor und einem Stator ausgebildet ist, ist regelmäßig an eine äußere Stromversorgung angeschlossen, wobei der Strom in Wicklungen des Rotors und/oder des Stators Magnetfelder erzeugt, die sich abstoßen oder anziehen und somit den Rotor in Rotation versetzen. Weiterhin ist es bekannt, im Rotor Permanentmagnete einzusetzen.

Bei Aufzugantrieben bzw. elektromotorischen Teilen von Aufzugantrieben ist es aufgrund des zur Verfügung stehenden begrenzten Raumes insbesondere wichtig, Motoren mit geringem Platzbedarf und somit geringer Baugröße einzusetzen.

Als weitere Komponenten von Aufzugantrieben sind insbesondere eine Treibscheibe, und gegebenenfalls ein Getriebe zu nennen. Es gibt jedoch auch getriebelose Aufzugantriebe, bei denen die Treibscheibe drehfest über eine Antriebswelle mit dem Rotor verbunden ist.

Aus der Druckschrift WO 99/43590 ist ein Aufzugsystem mit einem permanent erregten Motor bekannt. Der Aufzug wird dabei mit einem Seil betrieben, das mit dem Motor in Eingriff ist. Das Seil umfasst mindestens ein lasttragendes Element das in einer Umhüllung aus einem nichtmetallischen Material enthalten ist. Der Motor treibt das Seil an, das wiederum einen Fahrkorb im Aufzugschacht bewegt. Der Motor umfasst einen Rotor, der teilweise mit Permanentmagneten gebildet ist. Nachteilig bei dem eingesetzten Motor ist, dass dieser einen verhältnismäßig großen Raumbedarf hat.

Aus der Druckschrift WO 99/43589 ist ein Aufzugsystem mit einem Antriebsmotor bekannt, der zwischen dem Aufzugkorb und der Aufzugschachtseitenwand angeordnet ist. Dabei ist zusätzlich ein Gegengewicht vorgesehen, das ebenfalls im Aufzugschacht angeordnet ist. Der Antriebsmotor ist mit dem Aufzugkorb über zumindest ein flaches Seil verbunden. Auch dieser Motor erfordert viel Platz.

Die Druckschrift WO 02/103883 A1 beschreibt einen elektrischen Motor, der insbesondere für einen Aufzugantrieb vorgesehen ist. Dieser Motor weist einen Stator und einen Rotor auf, wobei der Stator und/oder der Rotor wenigstens ein als Gehäuse bzw. Körper dienendes Kunststoffteil aufweist, in das elektromagnetische und/oder permanentmagnetische Funktionselemente des Stators und/oder Rotors wenigstens teilweise eingeschlossen sind.

Der erfindungsgemäße Aufzugantrieb ist dadurch gekennzeichnet, dass das Blechpaket mit den Wicklungen des Stators und wenigstens ein tragendes Bauteil des Stators wenigstens teilweise mit einer Vergussmasse zur Bereitstellung einer statorseitigen Einheit bzw. Vergusseinheit vergossen sind. Eine derartige Vergusseinheit führt zu einer sehr großen mechanischen Festigkeit, wobei sich eine besonders stabile Verbindung der vergossenen Bauteile sowohl bei der Fertigung des Antriebs als auch beim späteren Betrieb ergibt. Eine derartige mechanische Festigkeit erweist sich insbesondere für Aufzugantriebe als besonders wichtig, da von diesen Antrieben sehr hohe Lasten bzw. Kräfte aufgenommen bzw. sicher übertragen werden müssen. Mittels Verwendung einer geeigneten Vergussmasse, bevorzugt Epoxydharz, kann auftretende Verlustwärme des Aufzugs in besonders effektiver Weise abgeführt werden. Dies führt dazu, dass erfindungsgemäß ein Aufzugantrieb bei vorgegebener Leistung wesentlich kleiner ausgeführt werden kann als dies herkömmlich der Fall war. Dies erweist sich beispielsweise bei Positionierung eines Antriebs im Aufzugsschacht, insbesondere Schachtkopf, wie dies bei triebwerksraumlosen Aufzügen vorgesehen ist, als vorteilhaft. Ferner ist die Montage eines derartigen Aufzugantriebs gegenüber herkömmlichen Antrieben erleichtert, da durch das gleichzeitige Vergießen von mehreren Teilen eine Einsparung von Montageschritten erzielt werden kann.

Besonders bevorzugte Ausführungsformen des erfindungsgemäßen Aufzugantriebs sind Gegenstand der Unteransprüche.

Es ist besonders bevorzugt, dass das wenigstens eine tragende Bauteil ein Lagerschild und/oder ein Gehäusering ist. Durch das Vergießen des Blechpakets mit den Wicklungen mit einem Gehäusering und/oder einem Lagerschild wird ein besonders robuster Stator bereitgestellt, wobei tragende Funktionen sowohl von dem Lagerschild und/oder dem Gehäusering als auch von der Vergussmasse übernommen bzw. übertragen werden. Da erfindungsgemäß auch die Vergussmasse eine tragende Funktion übernimmt, kann ein Gehäusering oder ein Lagerschild gegenüber herkömmlichen Lösungen kleiner bzw. einfacher dimensioniert werden. Mit der erfindungsgemäßen Lösung ist es auch möglich, ganz auf ein Antriebsgehäuse zu verzichten. Zweckmäßigerweise ist die im Rahmen des erfindungsgemäßen Antriebs vorgesehene statorseitige Vergusseinheit an ihren axialen Seiten bzw. Endseiten durch jeweils ein tragendes Bauteil, beispielsweise Gehäusering oder Lagerschild, begrenzt. Die radiale Begrenzung erfolgt zweckmäßigerweise durch das Blechpaket. Da die tragenden Bauteile vorteilhafterweise aus einem geeigneten metallischen Werkstoff hergestellt sind, weist die Einheit umfangs- und endseitig somit metallische Oberflächen auf, was zu einer verbesserten Robustheit und Handhabbarkeit, z.B. bei der Montage führt.

Es sei angemerkt, dass auch das Blechpaket hierbei eine tragende Funktion übernimmt. Das Blechpaket übernimmt ferner die Funktion eines Gehäuses.

Eine weitere Möglichkeit besteht darin, auf wenigstens einer axialen Seite des Antriebs auf ein mitvergossenes tragendes Bauteil zu verzichten. In einem derartigen Fall kann z.B. das Blechpaket wenigstens teilweise auch eine axiale Begrenzung der statorseitigen Vergusseinheit darstellen.

Vorteilhafterweise beaufschlagt die Vergussmasse das Blechpaket mit Wicklungen und das wenigstens eine tragende Bauteil derart, dass auf das Blechpaket und/oder das wenigstens eine tragende Bauteil wirkende äußere und/oder innere Kräfte aufgenommen und/oder an das wenigstens eine tragende Bauteil bzw. das Blechpaket übertragen werden können. Durch das erfindungsgemäße Vergießen des Blechpakets mit den Wicklungen und tragenden Bauteilen des Stators können insgesamt auf den Stator wirkende Kräfte gleichmäßiger über die gesamte Vergusseinheit verteilt oder übertragen werden, wodurch insgesamt die Lebensdauer eines derartigen Antriebs verlängert werden kann, da beispielsweise übermäßige Materialspannungen vermindert oder ganz vermieden werden können. Als Beispiel sei angegeben, dass bei einem Aufzug die Gewichtskräfte von Fahrkorb (gegebenenfalls mit Last) und Gegengewicht über eine Treibscheibe auf eine mit dem Rotor des Antriebs verbundene Welle wirken. Diese Kräfte werden z.B. über Lager an die statorseitige Einheit übertragen. Die erfindungsgemäße Ausbildung der statorseitigen Einheit ermöglicht eine besonders effektive Verteilung bzw. Ableitung dieser Kräfte. Insbesondere die Aufnahme und Weiterleitung von Kräften durch die Vergussmasse erweist sich in diesem Zusammenhang als sehr effektiv. Es sei an dieser Stelle noch einmal angemerkt, dass erfindungsgemäß sowohl die Vergussmasse, das Blechpaket sowie das wenigstens eine tragende Bauteil tragende Funktionen ausüben.

Gemäß einer weiteren bevorzugten Ausführungsform ist der Aufzugantrieb getriebelos (Gearless-Antrieb) ausgebildet. Ein derartiger Antrieb ist besonders kompakt bereitstellbar, wodurch er insbesondere für Anordnungen innerhalb eines Aufzugschachtes (z.B. Schachtkopf) geeignet ist. Ein Gearless-Antrieb zeichnet sich gegenüber mit Getriebe ausgebildeten Antrieben auch durch eine verminderte Anzahl von Bauteilen aus, da z.B. auf Übersetzungen zur Drehmomentverstärkung verzichtet werden kann. Die Bereitstellung einer erfindungsgemäßen statorseitigen Einheit führt zu einer weiteren Reduzierung der Anzahl der zu handhabenden Komponenten eines Aufzugantriebs bzw. des elektromotorischen Teils eines Aufzugantriebs. Die Erfindung führt ferner zu einer vorteilhaften Reduzierung der Gesamtgröße eines Aufzugantriebs.

Vorteilhafterweise umfasst der Aufzugantrieb einen Rotor und einen Stator, wobei Wicklungen des Stators und/oder des Rotors als Einzahnwicklungen ausgebildet sind. Diese Einzahnwicklungen, bei der die einzelnen Wicklungen immer nur um einen Zahn herum gelegt sind, ermöglichen es, Motoren mit geringerem Platzbedarf und hohem Wirkungsgrad durch kleine Wickelköpfe herzustellen.

Durch die Kombination aus Einzahnwicklung und Vergießen der Wicklung ergibt sich eine besondere Erhöhung der Leistungsdichte aufgrund des durch die Einzahnwicklung bedingten hohen Wirkungsgrads und der besseren Wärmeabfuhr durch den Blechpaket- bzw. Wicklungsverguss. Als Masse für den Verguss kann bspw. ein Epoxymaterial mit verschiedenen Füllstoffen und Füllanteilen verwendet werden.

Die Einzahnwicklung, die auch als konzentrierte Wicklung bezeichnet wird, kann als Einschicht- oder Zweischichtwicklung ausgebildet sein. Die Zweischichtwicklung, bei der in jeder Nut zwei Wicklungen vorgesehen sind und damit jeder Zahn mit einer Wicklung versehen ist, ist hinsichtlich des erzielten Rastmoments vorteilhaft. Des weiteren wird der Wirkungsgrad weiter erhöht.

Der erfindungsgemäße Antrieb bzw. elektromotorische Teil eines Aufzugantriebs kann mit und ohne Gehäuse ausgebildet sein. In der gehäuselosen Ausführung liegt das Blechpaket nach außen frei. Zeckmäßigerweise sind freiliegende Bereiche des Blechpakets mit einer Schutzlackierung versehen. Die gehäuselose Ausführung bietet eine noch bessere Wärmeabfuhr an die Oberfläche und eine zusätzliche Kosteneinsparung.

Weiterhin ist es möglich, den erfindungsgemäßen elektromotorischen Teil als Innenläufer oder Außenläufer auszugestalten.

Zur Kühlung herkömmlicher Aufzugantriebe können selbstbelüftete, eigenbelüftete oder fremdbelüftete Kühlungen, bei denen ein Lüfter über einen separaten Motor angetrieben wird, vorgesehen sein. Aufgrund der mit dem erfindungsgemäßen Aufzugantrieb ermöglichten sehr effektiven Wärmeableitung ist es möglich, derartige Kühlungen kleiner zu dimensionieren bzw. zu vereinfachen. Beispielsweise kann es möglich sein, einen Aufzugantrieb bestimmter Größe und Leistung, der herkömmlicherweise eine fremdbelüftete Kühlung benötigte, nur noch mit einer selbstbelüfteten oder eigenbelüfteten Kühlung auszubilden.

Die Erfindung bietet sich insbesondere bei permanent erregten Synchronmotoren an, bei denen bspw. die elektromagnetischen Funktionselemente des Rotors als Permanentmagnete ausgeführt sind. Weiterhin kann der Motor als "normaler" Motor mit zylindrischem Luftspalt oder als Scheibenläufer mit scheibenförmigem Luftspalt ausgebildet sein.

In Ausgestaltung ist eine Zweischichtwicklung mit wechselnden Ober- und Unterlagen vorgesehen. Vorzugsweise sind die Phasen nacheinander eingezogen bzw. eingebracht.

Bei dem Einsetzen der Wicklungen ist zu beachten, dass in eine Nut Wicklungen unterschiedlicher Phasen nur mit einem dazwischen gelegten Isolationsmaterial eingesetzt werden können, da die Isolation der Wicklungen an sich hierfür nicht ausreichend ist. Für diesen Zweck wird üblicherweise ein Isolationspapier verwendet.

Die besondere Anordnung der Wicklungen bei einer Zweischichtwicklung, bei der Wicklungen einzelner Phasen mit wechselnden Ober- und Unterlagen eingelegt sind, vereinfacht ein maschinelles Verfahren und ein automatisches Einziehen von Wicklungen. Ein Einbringen der Wicklungen, ohne dass diese mit Ausnahme des Sternpunkts verschaltet werden müssen, ist zudem möglich.

Ein entsprechendes Verfahren dient zum Einsetzen der Wicklungen, wobei Wicklungen jeder Phase nacheinander eingezogen werden. Dies ist insbesondere möglich, wenn Wicklungen einzelner Phasen mit wechselnder Ober- und Unterlage eingelegt bzw. eingebracht werden.

Die Ausführung der Einzahnwicklung als Zweischichtwicklung bewirkt durch Reduzierung der Verluste und Reduzierung der Drehmomentwelligkeit eine Erhöhung der Leistungsdichte. Die besondere Anordnung der Wicklungen ermöglicht das automatische Einbringen der Wicklungen ohne zeitintensiven Verschaltungsaufwand, da nur der Sternpunkt verschaltet werden muss.

Weiterhin sind Anschlussringe, die ein Paaren mit anderen Baugruppen ermöglichen (Baukastenprinzip) vorgesehen, die ein einfaches Vergießen ermöglichen, da keine Abdichtung und nur ein Stempel für verschiedene Baulängen zum Vergießen notwendig ist. Insbesondere die Gehäuseringe können als derartige Anschlussringe verwendet werden.

In Ausgestaltung ist ein modularer Aufbau, bei dem zweckmäßigerweise Ringe mit vergossen werden, vorgesehen. So ist der erfindungsgemäße elektromotorische Teil eines Aufzugantriebs problemlos austauschbar und paarbar. So können für unterschiedliche Leistungen unterschiedliche Statortypen für die gleiche Grundkonstruktion, d.h. beispielsweise die gleiche Dimensionierung von Rotor und/oder Lagerschild, verwendet werden.

Das erfindungsgemäße Verfahren zeichnet sich durch folgende Schritte aus: Anordnen und Fixieren von Wicklungen und tragenden Bauteilen des Stators in einer Trägervorrichtung, teilweises Befüllen eines Statorhohlraums mit Vergussmasse, Druckbeaufschlagen der Vergussmasse, insbesondere mittels eines Stempels derart, dass die Vergussmasse durch die Wicklungen und durch Zwischenräume zwischen den Wicklungen und den tragenden Bauteilen gedrückt wird, Aushärten der Vergussmasse zur Bereitstellung einer statorseitigen Einheit und Entfernen der Trägervorrichtung und gegebenenfalls des Stempels.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt eine bevorzugte Ausführungsform der Wicklungen eines Stators, der in einem erfindungsgemäßen Aufzugantrieb zum Einsatz kommt,
- Figur 2: zeigt eine erste bevorzugte Ausführungsform eines erfindungsgemäßen Aufzugantriebs in seitlicher Schnittansicht,
- Figur 3: zeigt die Ausführungsform gemäß Figur 2 (ohne Rotor) in einer perspektivischen Ansicht,
- Figur 4: zeigt eine zweite bevorzugte Ausführungsform eines erfindungsgemäßen Aufzugantriebs (ohne Rotor) in seitlicher Schnittansicht,
- Figur 5: zeigt die Ausführungsform gemäß Figur 4 in einer perspektivischen Ansicht, und
- Figur 6: dient zur Erläuterung einer bevorzugten Ausführungsform des erfindungsgemäßen Verfahrens.

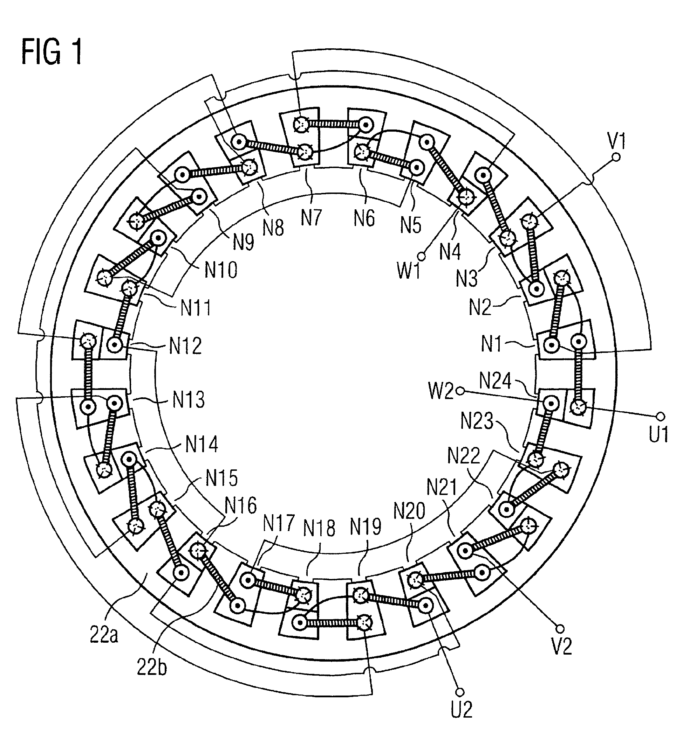

In Figur 1 ist das Blechpaket 22a mit Wicklungen 22b eines Stators mit drei Phasen U, V und W in Zweischichtwicklung dargestellt. Das Problem bei der Zweischichtwicklung besteht darin, dass die Aufteilung in üblicherweise zwei Einzüge wegen der Unter- und Oberschicht notwendig ist.

### Erster Einzug: Unterschicht (Nutgrund)

### Zweiter Einzug: Oberschicht (Richtung Luftspalt)

Zu beachten ist, dass nicht nur die Phasen miteinander verschaltet sein müssen, sondern auch die Spulen innerhalb der Phasen. Die Gesamtzahl der Verschaltungen bei einer z.B. 24-nutigen Zweischichtwicklung beläuft sich auf 21 Stück zzgl. des Sternpunkts. Dies verursacht einen erheblichen Zeitaufwand. Eine Herstellung zu einem angemessenen Preis scheint daher nicht möglich.

Zu beachten ist, dass die genannten Zahlen nur für die dargestellte Ausführung gelten. Es sind aber auch verschiedene andere Ausführungen mit unterschiedlichen Nutzahlen denkbar.

Es ist nunmehr vorgesehen, die Wicklungen nicht auf zweimal einzuziehen, sondern in drei Schritten, nämlich jede Phase für sich. Somit wird die Wicklung nicht in Unter- und Oberschicht aufgeteilt, sondern in die drei Phasen U, V und W, wobei in der Darstellung die Phase U die erste Phase ist, die Phase V die zweite und die Phase W als dritte Phase eingezogen wird.

Somit entfällt der Verschaltungsaufwand der Spulen und Spulengruppen komplett. Lediglich der Sternpunkt ist noch zu verschalten. Daher ergibt sich im dargestellten Beispiel eine Einsparung von 21 Verschaltungen, wodurch bei der Herstellung der damit einhergehende Zeitaufwand erheblich verringert werden kann.

Die Darstellung zeigt, wie die Spulen der Phasen als Zweischichtwicklungen mit wechselnder Ober- und Unterlage eingezogen sind. Dabei ist es möglich, die Phasen nacheinander einzuziehen. Außerdem ist zu beachten, dass zwischen Lagen unterschiedlicher Phasen ein Isolationsmaterial eingebracht werden muss.

Eine Spule der Phase U ist bspw. in Nut N24 und Nut N1 in Unterlage eingesetzt. Zwischen Nut N1 und Nut N2 erfolgt ein Wechsel zwischen Unter- und Oberlage. Bei der Phase V erfolgt bei der Wicklung von Nut N2 nach Nut N3 und bei der Wicklung von Nut N3 zu Nut N4 jeweils ein Wechsel zwischen Unter- und Oberlage. Diese besondere Art des Einziehens der Spulen der einzelnen Phasen ermöglicht ein einfaches maschinelles Einziehen der Spulen.

Weiterhin ist zu beachten, dass auch eine Flyer-Wickeltechnik eingesetzt werden kann.

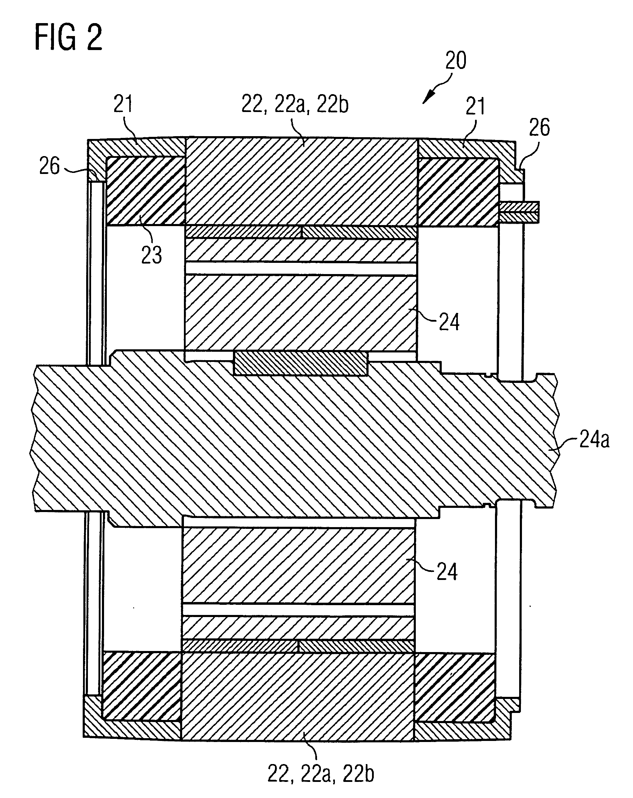

In Figur 2 ist eine erste bevorzugte Ausführungsform des erfindungsgemäßen Aufzugantriebs dargestellt und insgesamt mit Bezugsziffer 20 bezeichnet. Es sei angemerkt, dass in Figur 2 sowie in den übrigen Figuren lediglich die im Rahmen der vorliegenden Erfindung wesentlichen Komponenten eines Aufzugantriebs dargestellt sind. Beispielsweise wurde auf eine explizite Darstellung von gegebenenfalls vorhandenem Getriebe, Treibscheibe, Drehimpulsgeber usw. verzichtet. Lager bzw. Lagerkomponenten sind nur in einigen der Figuren explizit dargestellt. Es sei ebenfalls darauf hingewiesen, dass die in den Figuren dargestellten Bauteile dem elektromotorischen Teil eines Aufzugantriebs zuzurechnen sind. Insofern werden die Begriffe "Aufzugantrieb" und "elektromotorischer Teil eines Aufzugantriebs" in der vorliegenden Anmeldung teilweise synonym verwendet.

Der dargestellte Antrieb ist als getriebeloser Innenläufer-Antrieb ausgebildet, und umfasst einen Stator 22 mit Blechpaket 22a mit Wicklungen 22b, sowie einen Rotor 24 auf einer Welle 24a.

Der Stator 22 des in Figur 2 dargestellten Antriebs 20 weist auf seinen (axialen) Stirnseiten eine tragende Funktion ausübende Gehäuseringe 21 auf. Die Gehäuseringe 21 sind zusammen mit den in Figur 2 rein schematisch dargestellten Wicklungen 22b des Blechpakets 22a mittels einer Vergussmasse 23 vergossen. Als Vergussmasse wird vorteilhafterweise Epoxydharz verwendet. Das Blechpaket 22a, die Wicklungen 22b und Gehäuseringe 21 sind mittels der Vergussmase 23 derart vergossen, dass insgesamt eine starre, statorseitige Einheit bzw. Vergusseinheit 50 bereitgestellt ist, welche in der Lage ist, auf beliebige Teile des Stators wirkende Kräfte aufzunehmen und an andere Teile des Stators zu übertragen und/oder in benachbarte Komponenten, beispielsweise eine Statoraufhängung, abzuleiten. Die Vergussmasse ist hierbei mit einer derartigen mechanischen Festigkeit mit dem Blechpaket bzw. den Gehäuseringen 21 vergossen, dass auch die Vergussmasse selbst Kräfte aufnehmen und übertragen bzw. tragende Funktionen ausüben kann.

Die Vergusseinheit 50, welche gemäß der Ausführungsform der Figur 2 die Gehäuseringe 21, das Blechpaket 22a und die Wicklungen 22b umfasst, ist, wie erwähnt, axial durch die Gehäuseringe 21 begrenzt. Die radiale (umfängliche) Begrenzung zwischen den Gehäuseringen 21 wird durch die äußeren Schnittflächen der Bleche des Blechpakets 22a bewerkstelligt. Zweckmäßigerweise sind die Gehäuseringe 21 und/oder der durch das Blechpaket 22a definierte Außenumfang der Vergusseinheit 50 mit einer Schutzlackierung versehen. Es sei an dieser Stelle noch einmal darauf hingewiesen, dass das Blechpaket 22a hier Gehäusefunktionen sowie tragende Funktionen übernimmt.

Die Gehäuseringe 21 sind zweckmäßigerweise aus einem metallischen Werkstoff, insbesondere einem geeigneten Stahl (Stahllegierung) hergestellt. Gleiches gilt für das weiter unten erwähnte Lagerschild.

Weiterhin sind neutrale Schnittstellen, wie etwa Schultern 26, vorgesehen, so dass die dargestellte statorseitige Einheit 50 in einfacher Weise in beliebige Antriebe eingesetzt werden kann. Dabei können die Ausmaße des Antriebs gering sein. Dies ist insbesondere durch die eingesetzte Einzahnwicklung erreicht. Die Zweischichtwicklung gewährleistet ein verbessertes Rastmoment und eine weitere Erhöhung der Leistungsdichte, wie bereits erwähnt.

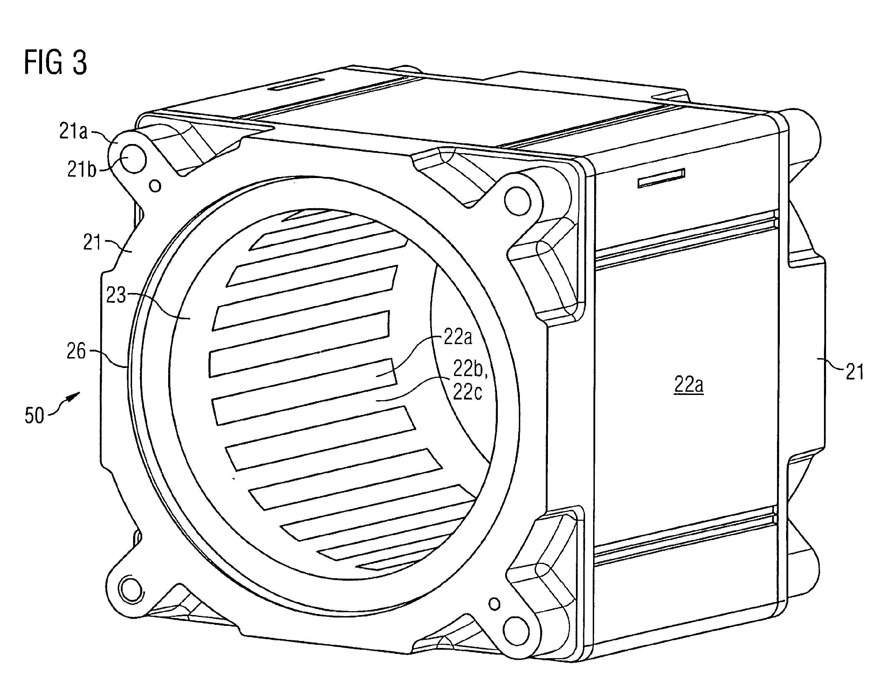

Figur 3 zeigt eine perspektivische Darstellung der statorseitigen Einheit des Antriebs gemäß Figur 2. Zu erkennen sind, in schematischer Darstellung, das vergossene Blechpaket 22a sowie in das Blechpaket eingebrachte Nuten 22c, in welchen die Wicklungen 22b positioniert sind. Strukturen dieser Komponenten 22a, 22b sind nicht im einzelnen erkennbar, da die genannten Komponenten mit der Vergussmasse 23 vergossen sind, und von dieser vollständig eingeschlossen sind. Die Nuten 22c entsprechen beispielsweise Nuten N1 bis N24 der Figur 1.

Man erkennt ferner die Gehäuseringe 21 sowie die Schultern 26. In radialen Ausformungen 21a der Gehäuseringe 21 sind Bohrungen oder Gewindebohrungen 21b eingebracht, mittels der die Einheit 50 mit weiteren Bauteilen, z.B. Lagerschilden, verschraubbar ist.

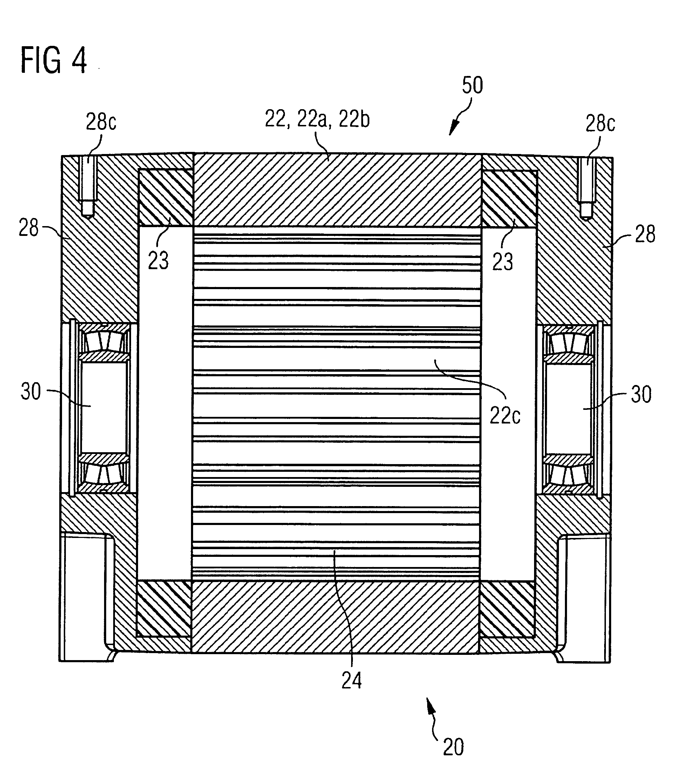

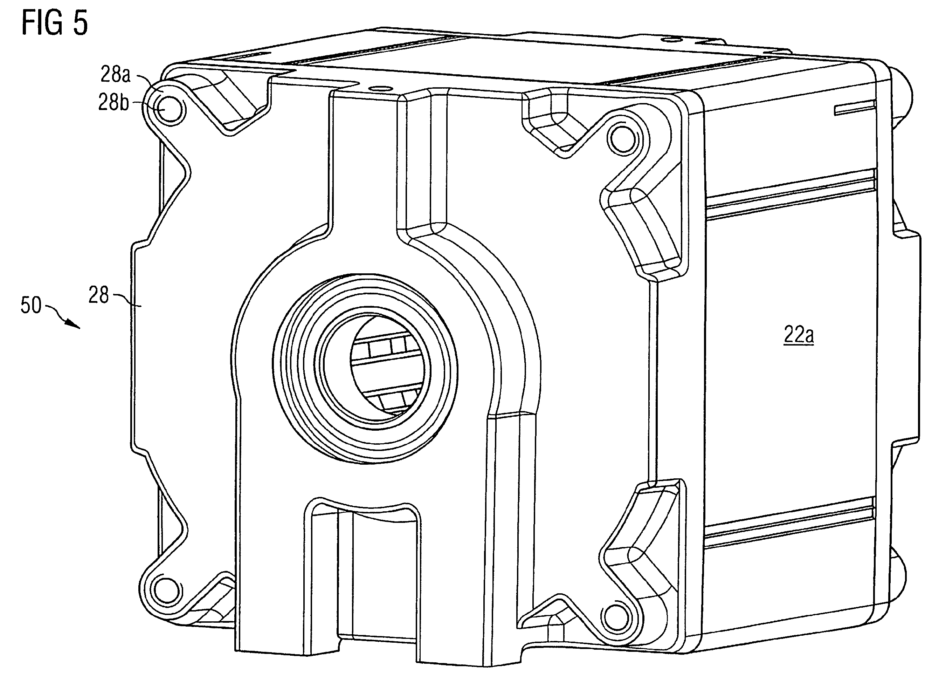

Eine weitere bevorzugte Ausführungsform des erfindungsgemäßen Antriebs ist in den Figuren 4 und 5 dargestellt.

Gleiche oder gleichartige Bauteile, wie sie bereits unter Bezugnahme auf die Figuren 1, 2 oder 3 beschrieben wurden, sind mit gleichen Bezugszeichen versehen.

Als wesentlichen Unterschied zu der Ausführungsform gemäß Figur 2 bzw. 3 erkennt man hier, dass anstelle der Gehäuseringe 21 Lagerschilde 28 vorgesehen sind. Man erkennt ferner in die Lagerschilde 28 eingebrachte Lager 30, auf denen eine mit dem Rotor (nicht dargestellt) drehfest verbundene Welle (hier ebenfalls nicht dargestellt) lagerbar ist. An den oberen Seiten der Lagerschilde 28 sind Ausnehmungen 28c vorgesehen, in welche geeignete Befestigungsmittel zur Montage des Antriebs beispielsweise in einem Aufzugschacht einbringbar sind.

Gemäß der Ausführungsform der Figur 4 ist wenigstens eines der Lagerschilde 28 mit dem Blechpaket 22a und den Wicklungen 22b des Stators 22 mittels Vergussmasse 23 zu einer statorseitigen Vergusseinheit 50 vergossen. Auch die Lagerschilder können mit radialen Ausformungen 28a mit Bohrungen 21b zur Befestigung ausgebildet sein.

Figur 5 zeigt eine perspektivische Ansicht des Antriebs bzw. der statorseitigen Einheit 50 des Antriebs gemäß Figur 4. Wesentlicher Unterschied zu der Ausführungsform gemäß Figur 3 ist, wie erwähnt, dass anstelle des Gehäuserings bzw. der Gehäuseringe 21 ein Lagerschild bzw. Lagerschilde 28 vorgesehen sind.

Die axiale Begrenzung der Einheit 50 erfolgt hier durch den oder die Lagerschilde 28, die radiale Begrenzung wieder durch das Blechpaket 22a.

Es sei angemerkt, dass auch Ausführungsformen denkbar sind, bei denen Gehäuseringe 21 und Lagerschilde 28 einseitig oder zweiseitig zusammen mit dem Blechpaket und den Wicklungen des Stators zu einer statorseitigen Einheit 50 vergossen sein können.

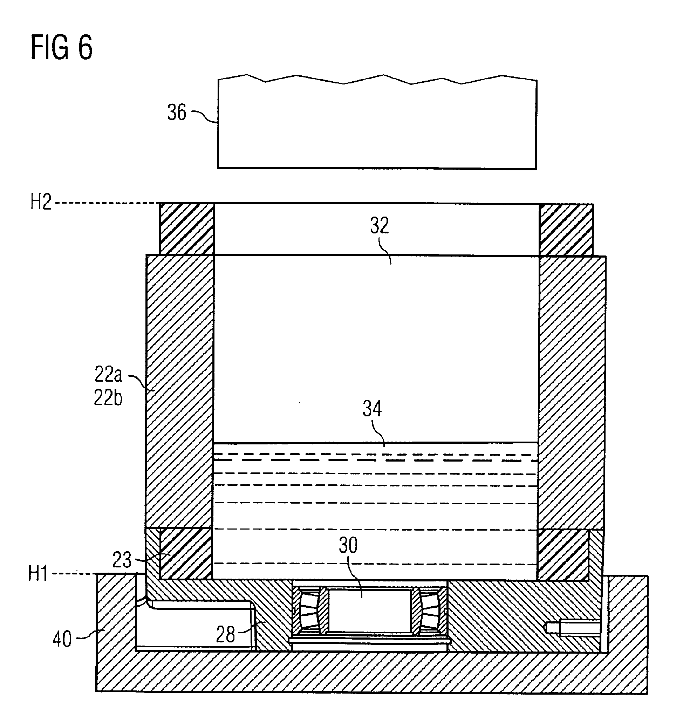

Eine besonders bevorzugte Ausführungsform des erfindungsgemäßen Verfahrens wird nun anhand der Figur 6 erläutert. Die Figur 6 zeigt ein Lagerschild 28 sowie das Blechpaket 22a mit Wicklungen 22b gemäß Figur 4, welche übereinander in eine Trägervorrichtung 40 eingebracht sind. Wie man erkennt, ist eines der Lagerschilde 28 entfernt, so dass der Statorhohlraum 32 von oben zugänglich ist. In diesen Statorhohlraum 32 wird eine flüssige Vergussmasse 34 eingeführt, wobei insbesondere etwa ein Viertel des Statorhohlraums 32 zunächst mit Vergussmasse gefüllt ist. Der Bereich des Lagerschildes, in dem das Lager 30 eingebracht ist oder zu einem späteren Zeitpunkt eingebracht wird, ist gegen das Eindringen von Vergussmasse abgedichtet.

Anschließend wird diese Vergussmasse mittels eines Vergussstempels 36 derart nach unten gedrückt, dass die Vergussmasse 34 in die Nuten des Blechpakets 22a, welche Teile der Wicklungen enthalten, bzw. in Zwischenräume zwischen den Statorwicklungen 22b und dem Lagerschild 28 eindringt.

Die Menge an eingefüllter Vergussmasse 34 wird derart gewählt, dass bei vollständigem Herunterdrücken des Stempels bis auf die Höhe H1 die genannten Nuten und Zwischenräume bis zu einer Höhe H2 komplett mit Vergussmasse gefüllt werden. Da die Wicklungen zusammen mit den Blechen eine radial dichte Anordnung bilden, kann kein Vergussmaterial aus dem Stator, d.h. den Blechen bzw. den Wicklungen, seitlich austreten.

Anschließend erfolgt ein Aushärten der flüssigen Vergussmasse 34 zur starren bzw. festen Vergussmasse 23, wodurch eine statorseitige Einheit 50, bei der Wicklungen 22b, Blechpaket 22a und Lagerschild 28 fest miteinander vergossen sind. Es sei angemerkt, dass die gleichzeitige Darstellung von flüssiger Vergussmasse 34 und starrer Vergussmasse 23 lediglich aus Gründen der Anschaulichkeit erfolgt.

Bei entsprechend größerer Dimensionierung der in dem zweiten Lagerschild gemäß Figur 4 vorgesehenen Ausnehmung für das Lager 30 ist es auch möglich, beide Lagerschilde 28 in der dargestellten Weise zu vergießen, da in diesem Fall ein in den Statorhohlraum 32 einzusetzender Rotor 24 ohne weiteres durch die Lageröffnung anschließend an den Vergussvorgang eingeführt werden könnte.

Ist hingegen keine entsprechend große Lageröffnung vorgesehen, erweist es sich als zweckmäßig, das zweite Lagerschild in geeigneter Weise nach Einführung des Rotors in den Statorhohlraum mit der Vergusseinheit zu verbinden. Insbesondere bevorzugt ist in diesem Zusammenhang, dass die Einheit 50 auf der einen Seite axial durch ein Lagerschild 28, wie es z.B. in den Figuren 4, 5 gezeigt ist, und auf der anderen Seite axial durch einen Gehäusering 21, wie er z.B. in Figur 2, 3 gezeigt ist, begrenzt wird. Die radiale Begrenzung erfolgt auch hier wieder zweckmäßigerweise durch das Blechpaket 22a. Mit anderen Worten, es ist denkbar, ein Blechpaket mit Wicklungen, einen Gehäusering sowie ein Lagerschild mittels Vergussmasse zu einer statorseitigen Einheit 50 zu vergießen. Es ist ebenfalls denkbar, auf einer (axialen) Seite der statorseitigen Einheit 50 ganz auf einen mitvergossenen Gehäusering oder Lagerschild zu verzichten, wobei in diesem Fall das Blechpaket und/oder die Vergussmasse die axiale Begrenzung der Einheit 50 bildet. Ein Gehäusering oder ein Lagerschild kann dann auf einer derart ausgebildeten Seite der Vergusseinheit beispielsweise mit dem Blechpaket verschraubt werden.

## Patentansprüche

1. Aufzugantrieb mit einem Rotor (24) und einem ein Blechpaket (22a) mit Wicklungen (22b) aufweisenden Stator (22), wobei das Blechpaket (22a) mit den Wicklungen (22b) und wenigstens ein tragendes Bauteil (21, 28) des Aufzugantriebs wenigstens teilweise mit einer Vergussmasse (23) zu einer statorseitigen Einheit (50) vergossen sind.

2. Aufzugantrieb nach Anspruch 1, **dadurch gekennzeichnet, dass** das tragende Bauteil ein Lagerschild (28) und/oder ein Gehäusering (21) ist.

3. Aufzugantrieb nach Anspruch 1 oder 2, **dadurch gekennzeichnet, dass** die Vergussmasse (23) das Blechpaket (22a) mit Wicklungen (22b) und das wenigstens eine tragende Bauteil (21, 28) derart beaufschlagt, dass auf das Blechpaket und/oder das wenigstens eine tragende Bauteil wirkende äußere und/oder innere Kräfte aufgenommen und/oder an das wenigstens eine tragende Bauteil bzw. das Blechpaket übertragbar sind.

4. Aufzugantrieb nach einem der vorstehenden Ansprüche, **dadurch gekennzeichnet, dass** er getriebelos ausgebildet ist.

5. Aufzugantrieb nach einem der vorstehenden Ansprüche, **dadurch gekennzeichnet, dass** die Wicklungen (22b) des Blechpakets (22a) und/oder eines Rotors (24) als Einzahnwicklung ausgebildet sind.

6. Aufzugantrieb nach einem der vorstehenden Ansprüche, bei dem die Wicklungen als Zweischichtwicklungen ausgebildet sind.

7. Aufzugantrieb nach einem der vorstehenden Ansprüche, der in eine Anzahl an Segmenten unterteilt ist, wobei jedem Segment ein Umrichter zugeordnet ist.

8. Aufzugantrieb nach einem der vorstehenden Ansprüche, der gehäuselos ausgebildet ist.

9. Aufzugantrieb nach einem der vorstehenden Ansprüche, der als Innenläufer oder als Außenläufer ausgebildet ist.

10. Aufzugantrieb nach einem der vorstehenden Ansprüche, bei dem Wicklungen einzelner Phasen (U, V, W) mit wechselnden Ober- und Unterlagen eingebracht werden können.

11. Aufzugantrieb nach Anspruch 10, bei dem die Phasen (U, V, W) so angeordnet sind, dass sie nacheinander eingebracht werden können.

12. Aufzugantrieb nach Anspruch 10 oder 11, bei dem die Wicklungen der drei Phasen (U, V, W) in drei Schritten, nämlich jede Phase (U, V, W) für sich, mit wechselnden Ober- und Unterlagen eingebracht werden können.

13. Verfahren zur Herstellung einer statorseitigen Einheit eines Aufzugsantriebs, insbesondere eines Aufzugsantriebs nach einem der vorstehenden Ansprüche, mit folgenden Schritten:
- Anordnen und Fixieren eines Blechpakets mit Wicklungen und wenigstens eines tragenden Bauteils eines Stators in einer Trägervorrichtung,
- Teilweises Befüllen eines Statorhohlraums mit Vergussmasse,
- Druckbeaufschlagen der Vergussmasse derart, dass die Vergussmasse in Nuten des Blechpakets, durch die Wicklungen und durch Zwischenräume zwischen dem Blechpaket und/oder den Wicklungen und den tragenden Bauteilen gedrückt wird,
- Aushärten der Vergussmasse zur Bereitstellung einer statorseitigen Einheit, und
- Entfernen der Trägervorrichtung.

14. Verfahren nach Anspruch 13, **dadurch gekennzeichnet, dass** als tragende Bauteile wenigstens ein Gehäusering oder wenigstens ein Lagerschild vorgesehen sind.

15. Statorseitige Einheit des elektromotorischen Teils eines Aufzugantriebs, **dadurch gekennzeichnet, dass** die Einheit ein Blechpaket (22a) mit Wicklungen (22b) sowie wenigstens ein tragendes Bauteil (21, 28) des Aufzugantriebs aufweist, wobei das Blechpaket mit Wicklungen sowie das wenigstens eine tragende Bauteil wenigstens teilweise mittels einer Vergussmasse (23) miteinander vergossen sind.
